(19) Europäisches Patentamt
European Patent Office
Office européen des brevets

(11) **EP 1 482 311 B1**

(12) **EUROPÄISCHE PATENTSCHRIFT**

(45) Veröffentlichungstag und Bekanntmachung des Hinweises auf die Patenterteilung:
**29.08.2012   Patentblatt 2012/35**

(51) Int Cl.:
*F41G 3/12* (2006.01)      *G01P 3/66* (2006.01)

(21) Anmeldenummer: **04007014.6**

(22) Anmeldetag: **24.03.2004**

(54) **Vorrichtung und Verfahren zur Ermittlung der Mündungsgeschwindigkeit eines Projektils**

Device and method for the determination of the muzzle velocity of a projectile

Dispositif et procédé de détermination de la vitesse initiale d'un projectile

(84) Benannte Vertragsstaaten:
**AT BE BG CH CY CZ DE DK EE ES FI FR GB GR HU IE IT LI LU MC NL PL PT RO SE SI SK TR**

(30) Priorität: **28.05.2003   CH 9612003**

(43) Veröffentlichungstag der Anmeldung:
**01.12.2004   Patentblatt 2004/49**

(73) Patentinhaber: **Rheinmetall Air Defence AG
8050 Zürich (CH)**

(72) Erfinder:
• **Alberti, Aldo
8404 Winterthur (CH)**

• **Münzel, Klaus
5313 Klingnau (CH)**

(74) Vertreter: **Dietrich, Barbara et al
Thul Patentanwaltsgesellschaft mbH
Rheinmetall Platz 1
40476 Düsseldorf (DE)**

(56) Entgegenhaltungen:
**CH-A5- 693 248      FR-A- 914 221
GB-A- 2 200 215      US-A- 4 228 397**

• **PATENT ABSTRACTS OF JAPAN vol. 017, no. 566 (P-1629), 14. Oktober 1993 (1993-10-14) -& JP 05 164769 A (JAPAN STEEL WORKS LTD:THE), 29. Juni 1993 (1993-06-29)**

**Beschreibung**

Die Erfindung betrifft eine Vorrichtung zur Ermittlung der Mündungsgeschwindigkeit eines Projektils nach dem Anspruch 1 und ein Verfahren zur Ermittlung der Mündungsgeschwindigkeit eines Projektils nach dem Anspruch 13.

Es wird die Priorität des Schweizer Patentgesuches Nr. 2003 0961/03 vom 28. Mai 2003 beansprucht.

Die Mündungsgeschwindigkeit eines Projektils wird im Schiesswesen üblicherweise mit V0 bezeichnet und auch V0-Geschindigkeit genannt. Es handelt sich hierbei um diejenige Geschwindigkeit, mit der sich ein von einer Rohrwaffe abgeschossenes Projektil beim Austritt aus dem Waffenrohr relativ zum Waffenrohr auf seiner Trajektorie bewegt.

Unter dem Begriff einer Rohrwaffe sollen im Rahmen der vorliegenden Beschreibung sowohl Geschütze wie auch Raketenabschussrohre verstanden werden. Unter dem Begriff eines Projektils sollen alle Flugkörper verstanden werden, die aus einem Waffenrohr abschiessbar sind, also ballistische Projektile und Projektile mit mindestens teilweisem Selbstantrieb. Als ballistische Projektile werden übliche herkömmliche Geschosse, die beim Aufprall detonieren, wie auch tempierbare bzw. programmierbare Geschosse, die zum Beispiel im Flug detonieren, verstanden. Die Projektile können drall- und/oder pfeilstabilisiert sein, sie können beispielsweise als Treibspiegelgeschosse, als Primärgeschosse, welche mehrere Sekundärgeschosse mit sich führen, oder als Übungsgeschosse mit Kern und Mantel ausgebildet sein.

Von der V0-Geschwindigkeit sind unter anderem die Flugdauer, die Schussdistanz und die Treffpunktlage abhängig. Die genaue Kenntnis der Mündungsgeschwindigkeit V0 ist aber insbesondere im Zusammenhang mit programmierbaren Projektilen wichtig, da der Zeitpunkt der Übertragung eines Programmiercodes an ein Projektil zwecks Erreichung der gewünschten Waffenwirkung von der Mündungsgeschwindigkeit V0 abhängt. Die Mündungsgeschwindigkeit V0 hängt auch vom Gewicht und der Temperatur der Treibladung ab.

Eine theoretische Mündungsgeschwindigkeit V0(theor) lässt sich rechnerisch ermitteln, wenn alle diesbezüglich relevanten Daten, welche die Waffe bzw. das Waffenrohr und das abzuschiessende Projektil betreffen, bekannt sind. In Wirklichkeit weicht die Mündungsgeschwindigkeit V0 fast immer von der theoretisch berechneten Mündungsgeschwindigkeit V0(theor) ab, unter anderem, weil sowohl die Waffe bzw. das Waffenrohr als auch das Projektil nicht genau mit den der Berechnung zu Grunde gelegten Daten übereinstimmen. Insbesondere verringert sich die V0-Geschwindigkeit als Folge der Abnutzung des Waffenrohres. Es ist daher unumgänglich, beim Schiessen jeweils die tatsächliche Mündungsgeschwindigkeit zu messen, um im Hinblick auf das zu bekämpfende Ziel ggfs. Azimut und Elevation des Waffenrohres zu korrigieren und/oder um die Programmierung des Projektils oder mindestens der nachfolgenden Projektile entsprechend durchzuführen.

Zur Messung der tatsächlichen V0-Geschwindigkeit sind verschiedene Vorrichtungen und Verfahren bekannt. Häufig basiert die Messung der V0-Geschwindigkeit auf einem Schrankenprinzip. Eine solche V0-Messung ist aus der EP-0 108 973-A1 bekannt. Hier werden zwei Spulen benutzt, die in einem bekannten gegenseitigen Abstand angeordnet sind, und zwar in Flugrichtung des Projektils gesehen nach dem Austrittsquerschnitt des Waffenrohres. Diese Spulen bzw. ihr gegenseitiger Abstand bilden eine Messbasisstrecke. Die Spulen sind im Allgemeinen mindestens annähernd konzentrisch zur Längsachse des Waffenrohres angeordnet, und ihr Innendurchmesser ist etwas grösser als das Kaliber des Waffenrohres. Die Spulen liegen an Stromquellen, so dass sich im Bereich jeder Spule ein Magnetfeld ergibt und bei Durchtritt des Projektils eine induzierte Spannung abgreifbar ist. Während ein Projektil den Bereich der Spulen durchfliegt, wird das Magnetfeld gestört, und die abgreifbare Spannung ändert sich in Funktion der Relativlage des Projektils zur Spule.

Diese vorbekannte Zweispulen-Vorrichtung zur V0-Messung weist einige Nachteile auf, von denen die Wichtigsten in der Folge kurz genannt sein sollen. Durch die Anordnung von zwei Spulen hat die Vorrichtung ein verhältnismässig hohes Gewicht und ein grosses Volumen. Auch der Aufwand an zusätzlichen Geräten ist wegen der Anordnung von zwei Spulen verhältnismässig gross, da für jede Spule ein Auswertekanal benötigt wird. Im Weiteren muss die Vorrichtung für eine präzise V0-Messung eine bestimmte Länge aufweisen, da der Abstand der Spulen unter anderem durch die Länge des jeweilig zu verschiessenden Projektils bestimmt ist. Sollen also aus einem Waffenrohr auch lange Projektile, beispielsweise Unterkalibergeschosse, verschossen werden, so sind die Spulen weiter voneinander entfernt, wobei insbesondere die zweite Spule weit von der Waffenrohrmündung entfernt ist. Die Spulen können ohnehin leicht beschädigt werden, und die Gefahr der Beschädigung der Spulen nimmt zu, je weiter sie vom Waffenrohr entfernt sind. Wenn die Absicht besteht, Unterkalibermunition zu verschiessen, so müssen aufwendige konstruktive Massnahmen getroffen werden, um eine Beschädigung der Spulen durch die Treibspiegelbestandteile zu verhindern, die sich unmittelbar nach dem Abschuss vom eigentlichen Projektil entfernen. Sollen nur kurze Projektile verschossen werden, so würde keine lange Messbasisstrecke benötigt, und die Spulen könnten in einem relativ geringen Abstand voneinander angeordnet werden. Dabei besteht aber die Gefahr, dass sich die beiden Spulen bezüglich der sich in ihrem Bereich abspielenden elektromagnetischen Wirkungen gegenseitig beeinflussen und dadurch eine präzise V0-Messung verhindern, oder eine solche apparativ aufwendig machen.

Aus der Patentanmeldung GB-2 200 215 ist eine Vorrichtung zur Durchführung einer V0-Messung bekannt, bei der nicht zwei Spulen sondern nur eine einzige Spule eingesetzt wird. Diese Spule ist unmittelbar vor dem Mündungsquerschnitt angeordnet. Sie liegt also um das bzw. an dem Waffenrohr und steht unter Strom, so dass im Bereich der Spule ein Magnetfeld entsteht. Wie bei der oben beschriebenen Zweispulen-Vorrichtung, wird beim Durchtritt des Projektils durch die Spule eine sich zeitlich verändernde induzierte Spannung abgegriffen. Mit dieser Einspulen-Vorrichtung werden zwar gewisse Nachteile der Zweispulen-Vorrichtung vermieden, insbesondere deren relativ grosse Abmessungen und Gewicht, die Beschädigungsgefahr wird praktisch eliminiert, eine gegenseitige Störung von mehreren Spulen ist ausgeschlossen und es ist nur ein Auswertekanal erforderlich. Nachteilig an dieser Vorrichtung ist aber, dass hier das Magnetfeld, durch welches sich das Projektil bewegt, vom Waffenrohr gestört wird. Ferner entstehen bei modernen Waffen am Waffenrohr sehr hohe Temperaturen bis zu 600°C. Spulen mit Wicklungen aus Kupfer, wie sie bevorzugt verwendet werden, könnten bei einer Anordnung am Waffenrohr gar nicht verwendet werden, da sie nur bei Temperaturen bis etwa 250°C einsetzbar sind. Es ist ein weiterer Nachteil dieser Anordnung, dass das magnetische Feld der Spule durch das Waffenrohr gestört und gedämpft wird. Eine solche Anordnung hat also eine reduzierte Empfindlichkeit. Die induzierte Spannung hat eine kleinere Amplitude und die Auswertung eines solch "kleinen" Signals ist ungenau.

Im Weiteren ist aus der JP-05 164 760 eine Vorrichtung zur Durchführung der V0-Messung bekannt, die auch nur eine Spule aufweist. Die Spule ist wie üblich koaxial zum Waffenrohr angeordnet, aber sie befindet sich im Waffenrohr selbst, und zwar in Richtung der Waffenrohr-Längsachse gesehen nahe beim Austrittsquerschnitt der Projektile. Der Innendurchmesser der Spule ist grösser als der In. nendurchmesser des Waffenrohres, so dass die sonst durchgehend zylindrische Innenfläche des Waffenrohres am Ort der Spule durch einen Luftspalt unterbrochen Ist. Die zu verschiessenden Projektile weisen an ihrem Umfang einen ferromagnetischen Ring auf Die axiale Länge des Luftspaltes bzw. den ferromagnetischen Ringes bildet die Messbasisstrecke. Gemessen wird der Verlauf der Änderung des Magnetfeldes der Spule. Beim Durchtritt des ferromagnetischen Ringes durch den Bereich der Spule bzw. des Luftspaltes ergibt sich ein Kurzschluss Im magnetischen Kreis, die Faldstärke steigt an, und deshalb lässt sich eine pulsartige Stromänderung feststellen. Da die Messbasisstrecke bzw. der ferromagnetische Ring In Axialrichtung nur eine geringe Abmessung hat, Ist die pulsartige Änderung von geringer zeitlicher Dauer Diese Vorrichtung zur Durchführung der VO-Messung ist rohrgebunden, das mit Ihr durchgeführte Messverfahren kann nur realisiert werden, wenn spezielle Projektile, nämlich solche mit ferromagnetischen Ringen, verwendet werden.

Die US 4,228,397 A betrifft eine Vorrichtung und beschreibt ein Verfahren zur Geschwindigkeitsmessung eines Projektils Im Waffenrohr. Die Vorrichtung umfasst eine Isolierte Spule, die in Front des Waffenrohrendes an der Mündung eingebunden ist. Die Spule Ist elektrisch mit einem Oszillator verbunden, der ein Signal in die Spule einkoppelt. Dieses spricht auf das die Spule durchquerende Projektil an. Zeitmessungsmittel wirken mit dem Oszillator zusammen um ein Zeltsignal aufzuarbeiten. Ausgenutzt wird, dass die Signatur der Projektile eine Änderung des Signale bewirkt. Die Signatur des Projektils bewirkt einen ersten und einen zweiten Anstleg und einen Abfall Im Signal auf "Null". Die beiden Anstlege werden zeitlich ausgewertet. Aus dieser Zeltdifferenz wird dann die Geschwindigkeit ermittelt.

Aus der CH 693 248 A ist eine Vorrichtung zur Messung der Geschwindigkeit von Projektilen bekannt. Diese ist am Rohrende als zylindrischer Messkopf mit zwei eingebauten Magnetfeldsensoren, die sich im Einflussbereich eines Grundmagnetfeldes befinden, das beispielsweise durch zwei Dauermagnete erzeugt wird. Die nacheinander auftretenden Ausganssignale der Sensoren werden zur Messung einer Zeitspanne benutzt, während der das Projektil eine vorbestimmte Strecke durchläuft. Bel der Verwendung von nur einem Magnetfeidsensor wind eine negative Spitzenspannung zum Auslösen des Zählers genutzt, während eine positive Spitzenspannung den Zähler wieder stoppt. Hierbei dient dann die Zeitspanne zwischen dem Minimum und dem Maximum als Funktion einer Änderung des Magnetfeldes beim Passieren des Projektils.

Es ist nun Aufgabe der Erfindung, eine Vorrichtung und ein Verfahren für die Durchführung der V0-Messung vorzuschlagen, mit welchem die Nachteile der bekannten Ein- und Zwelspulen-Vorrichtungen vermieden werden und mit nur einem Sensor auch geschossunabhängige Messergebnisse erhalten werden.

Die Lösung dieser Aufgabe erfolgt erfindungsgemäss für die Vorrichtung durch die Merkmale des Anspruchs 1 und für das Verfahren durch die Merkmale des Anspruchs 13. Bevorzugte Weiterbildungen und vorteilhafte Einzelheiten sind durch die jeweiligen abhängigen Ansprüche definiert.

Das augenscheinlich wichtigste Merkmal, durch weiches sich die neue Vorrichtung von den weiter oben beschriebenen bekannten Zweispulan-Vorrichtungen unterscheidet, liegt darin, dass nur eine einzige Spule benötigt wird. Bei der neuen Vorrichtung, durch welche keine Schranke gebildet wird, stehen nur Signale einer einzigen Spule zur Verfügung, so dass zur Auswertung der von der Spule zur Verfügung gestellten Daten auch ein neues Verfahren zum Einsatz kommt.

Die Spule liegt nicht am Äusseren des Waffenrohrs an, sondern sie ist, in Bewegungsrichtung des Projektils gesehen, nach dem Mündungsquerschnitt des Waffenrohres angeordnet. Dort sind die Temperaturen so tief, dass Spulen mit Kupferwindungen eingesetzt werden können. Vorteilhaft an der Anordnung der Spule nach dem Mündungsquerschnitt ist auch, dass das Magnetfeld nicht durch das Rohr beeinflusst wird. Somit ist die Frequenz des entsprechenden Signals kleiner und man erzielt bei der Auswertung bessere Ergebnisse.

Die neue Vorrichtung mit nur einer Spule ist wesentlich kürzer als die bekannten Zweispulen-Vorrichtungen, und sie ist auch entsprechend leichter. Der Aufwand an weiteren Geräten ist im Vergleich mit dem Stand der Technik reduziert, da für die Auswertung nur ein Auswertekanal benötigt wird. Die Gefahr der Beschädigung der Spulen ist stark reduziert, da keine Spule in verhältnismässig grossem Abstand von der Waffenrohrmündung angeordnet werden muss.

Das neue Verfahren ist so, dass an der Vorrichtung keine Messbasisstrecke benötigt wird. Die Vorrichtung ist daher auch für relativ lange Projektile, beispielsweise für Unterkalibergeschosse, gut geeignet.

Die Genauigkeit des neuen Verfahrens ist bei entsprechend hoher Herstellungsgenauigkeit aller Teile für jede praktische Verwendung genügend. Unbedeutende Ungenauigkeiten können ihre Ursache darin haben, dass das erzeugte Magnetfeld nicht völlig konstant ist, und dass die Projektile, die ihrerseits Parameter für die V0-Messung bilden, sich immer um ein weniges voneinander unterscheiden können. Sodann wirkt eine Mündungsbremse, wenn das Projektil das Waffenrohr verlässt, wodurch unbekannte minimale Bewegungen entstehen, die eine Überlagerung des zur Verfügung gestellten Messsignals verursachen können.

Einzelheiten und Vorteile der Erfindung werden im Folgenden anhand von Ausführungsbeispielen und mit Bezug auf die Zeichnung ausführlich beschrieben. Es zeigen:

Fig. 1    ein Waffenrohr mit einer erfindungsgemässen Vorrichtung, in vereinfachter, schematisierter Darstellung;

Fig. 2    in der linken Hälfte der Figur drei Teilfiguren mit je einem Projektil beim Austritt aus dem Waffenrohr in drei verschiedenen Lagen bzw. zu drei aufeinanderfolgenden Zeitpunkten, und in der rechten Hälfte der Figur den Verlauf der Spannung als Funktion der Zeit beim Durchtritt des Projektils durch eine Spule der erfindungsgemässen Vorrichtung;

Fig. 3    ein erstes Ausführungsbeispiel der Vorrichtung nach der Erfindung, wobei die Auswertung der von der Spule zur Verfügung gestellten Grössen in analoger Weise erfolgt, dargestellt als Schaltbild; und

Fig. 4    ein zweites Ausführungsbeispiel der Vorrichtung nach der Erfindung, wobei die Auswertung der von der Spule zur Verfügung gestellten Grössen in digitaler Weise erfolgt, in gleicher Darstellung wie Fig. 3.

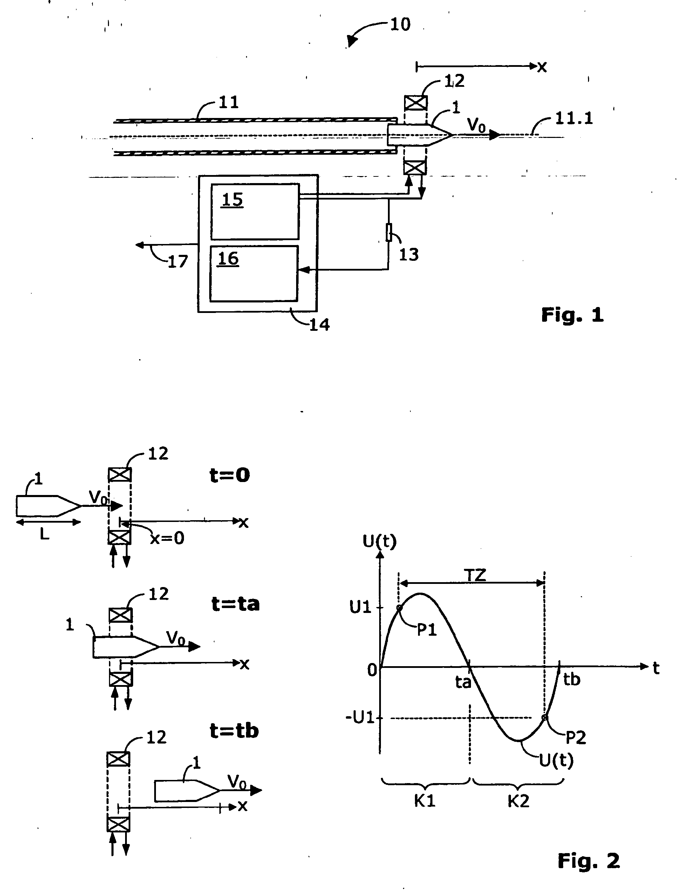

Mit Bezug auf Fig. 1 werden eine Ausführungsform der Erfindung und die Funktion des erfindungsgemässen Verfahrens beschrieben. In Fig. 1 ist eine Vorrichtung 10 zur Ermittlung der V0-Geschwindigkeit eines Projektils 1 beim Austritt aus einem Waffenrohr 11 gezeigt. Die Vorrichtung 10 umfasst eine Spule 12, die eine Wicklung besitzt, und die im Bereich des Austritts um eine Längsachse 11.1 des Waffenrohrs 11 herum angeordnet ist. Die Wicklung der Spule 12 kann, je nach Ausführungsform, aus einer oder mehreren Windungen bestehen. Es ist eine Versorgungsvorrichtung 15 vorgesehen, um einen konstanten Strom I in die Wicklung der Spule 12 einzuprägen. Der Strom I, der durch die Wicklung der Spule 12 fliesst, erzeugt ein Magnetfeld H im Umfeld der Spule 12. Dieses Magnetfeld H wird beim Durchtritt des Projektils 1 durch die Spule 12 gestört und dadurch verändert. Aus der Störung bzw. Veränderung des Magnetfelds H kann bei entsprechender Auswertung, wie im Folgenden hergeleitet wird, eine zuverlässige und genaue Aussage über die V0-Geschwindigkeit gemacht werden.

Das Projektil 1 induziert beim Durchtritt durch die Spule 12 eine Spannung U(t) in der Wicklung der Spule 12. Diese induzierte Spannung U(t) kann wie folgt bestimmt werden:

$$U(t) = -N\frac{d\Phi}{dt} = -N\frac{d\Phi}{dx}\frac{dx}{dt} = -N\frac{d\Phi}{dx}V0 \qquad\qquad (1)$$

Es bedeuten:

N:    Anzahl der Windungen der Wicklung der Spule 12 [-];
x:    zurückgelegte Distanz des Geschosses in Schussrichtung [m];
VO:    Mündungsgeschwindigkeit, auch V0-Geschwindigkeit genannt, [m/s];
$\Phi$:    magnetischer Fluss [Volt s].

Die zeitliche Flussänderung $d\Phi/dx$ ist proportional zur Änderung der magnetischen Feldstärke dH(x)/dx, die mit Hilfe des Gesetzes von Bio und Savart wie folgt approximativ bestimmt werden kann:

$$\frac{d\Phi}{dx} = \frac{DG^2 \cdot \pi}{4} \mu 0 \cdot \mu r \frac{dH(x)}{dx} \qquad (2)$$

Es bedeuten:

DG: Durchmesser des Projektils 1 [m];
$\mu 0$: Induktionskonstante [H/m=Vs/Am)];
$\mu r$: Permeabilität;
H: Magnetische Feldstärke [A/m];

Für H(x) folgt dem Gesetz von Biot-Savart zu:

$$H(x) = \frac{I \cdot D^2 \cdot N}{8 \cdot \left[ x^2 + \left[ \frac{D}{2} \right]^2 \right]^{3/2}} \qquad (3)$$

Es bedeuten:

D: Durchmesser der Spule 12 [m]
I: Strom durch die Spule 12 [A]

Differenziert man die Gleichung (3) nach x, so folgt für die Änderung der magnetischen Feldstärke als Funktion von x:

$$\frac{dH(x)}{dx} = \frac{I \cdot D^2 \cdot N}{8} x \cdot 3 \left[ x^2 + \left[ \frac{D}{2} \right]^2 \right]^{-5/2} \qquad (4)$$

Aus den Gleichungen (1), (2) und (4) folgt für die Beziehung für die induzierte Spannung U(t) während des Durchgang des Projektils 1 durch die Spule 12 der folgende Ausdruck:

$$U(t) = VK \frac{DG^2 \pi}{4} \mu 0 \cdot \mu r \frac{ID^2 N^2}{8} x \cdot 3 \left[ x^2 + \left[ \frac{D}{2} \right]^2 \right]^{-5/2} \qquad (5)$$

Darin bedeutet:

K: Spannungsreduktion infolge der auftretenden Wirbelströme im Gehäuse des Projektils 1

Die Bedeutung der oben hergeleiteten Gleichungen wird nun mit Bezug auf Fig. 2 erläutert. Für die Erklärung des Spannungsverlaufs U(t) ist insbesondere die Gleichung (4) massgebend:
Für x = 0 gilt:
Das Projektil 1 befindet sich, in Bewegungsrichtung gesehen, in der Mitte der Spule 12 bzw. der mittlere Querschnitt des Projektils 1 liegt, in Bewegungsrichtung gesehen, im mittleren Querschnitt der Spule 12 und die in der Spule 12 induzierte Spannung U(t) ist Null. Dies ist zum Zeitpunkt t = ta der Fall.
Für x < 0 gilt:
Das Projektil 1 befindet sich, in Bewegungsrichtung gesehen, links von der Mitte der Spule 12 und taucht mit der Geschwindigkeit V0 in die Spule 12 ein. Die induzierte Spannung U(t) nimmt mit zunehmendem x kontinuierlich zu und

EP 1 482 311 B1

erreicht einen Maximalwert. Dann nimmt die Spannung U(t) wieder ab und hat einen Nulldurchgang bei x = 0, wenn sich das Projektil 1 in der Mitte der Spule 12 befindet.

Für x > 0 gilt:
Das Projektil 1 befindet sich rechts von der Mitte der Spule 12 und die induzierte Spannung U(t) nimmt mit zunehmendem x kontinuierlich ab und erreicht einen Minimalwert. Bewegt sich das Projektil 1 weiter aus der Spule 12 heraus, so nimmt die induzierte Spannung U(t) wieder zu und strebt für grosse Werte von x gegen 0 Volt.

Mit der Gleichung (5) kann der Verlauf der induzierten Spannung U(t) approximativ berechnet werden. Nicht berücksichtigt wurden in der obigen Betrachtung die Wirbelströme, die sich im Mantel des Projektils 1 während des Durchgangs des Projektils 1 durch die Spule 12 aufbauen, und die ein Gegenfeld erzeugen. Dieses Gegenfeld schwächt das ursprüngliche Feld und reduziert die Amplitude der induzierten Spannung U(t) in der Spule 12. Diese Spannungsreduktion wird in der Gleichung (5) durch die Grösse K berücksichtigt. Die Grösse K bzw. hier der Faktor K wird als Korrelationsgrösse bezeichnet und kann gemäss Erfindung experimentell und/oder rechnerisch ermittelt werden. Jeder Projektiltyp hat eine andere, für ihn charakteristische Korrelationsgrösse K, oder, mit anderen Worten, die Korrelationsgrösse K charakterisiert den Projektiltyp. Wenn man vorher weiss, welcher Projektiltyp verschossen wird, so kann anhand der induzierten Spannung U(t) eine Aussage über die V0-Geschwindigkeit des Projektils 1 getroffen werden. Die Herleitung der V0-Geschwindigkeit wird im Folgenden erklärt.

Zur Berechnung der V0-Geschwindigkeit wird die Länge eines Verzögerungszeitintervalls TZ gemessen, ausgehend von einem in Fig. 2 dargestellten Startpunkt P1, bei welchem die Amplitude der induzierten Spannung U(t) = + U1 ist. Sobald dann die Amplitude der induzierten Spannung U(t) den Wert -U1 erreicht hat, wird die Zeitmessung gestoppt.

Es gelten somit die folgenden beiden Gleichungen (6) und (7) zur Bestimmung von x1 und x2.

$$V0 \cdot K \cdot \frac{DG^2 \cdot \pi}{4} \mu 0 \cdot \mu r \frac{I \cdot D^2 \cdot N^2}{8} \cdot x1 \cdot 3 \left[ x1^2 + \left[ \frac{D}{2} \right]^2 \right]^{-5/2} - U1 = 0 \qquad (6)$$

$$V0 \cdot K \cdot \frac{DG^2 \cdot \pi}{4} \mu 0 \cdot \mu r \frac{I \cdot D^2 \cdot N^2}{8} \cdot x2 \cdot 3 \left[ x2^2 + \left[ \frac{D}{2} \right]^2 \right]^{-5/2} + U1 = 0 \qquad (7)$$

Ausserdem gilt:

$$V0 = \frac{x2 - x1}{TZ} \qquad (8)$$

Aus dem Gleichungssystem der drei Gleichungen (6), (7) und (8) folgen die gesuchten Werte von V0, x1 und x2.

Diese theoretische Herleitung wird nun auf das Ausführungsbeispiel der Figuren 1 und 2 angewendet.

Beim Durchtritt des Projektils 1 durch das Magnetfeld H der Spule 12 wird ein Spannungspuls U(t) induziert, wie in Fig. 2 gezeigt. Die zeitliche Dauer des Spannungspulses U(t) ist mit der V0-Geschwindigkeit und der Länge L des Projektils 1 korreliert. Es ist eine Auswertevorrichtung 16 vorgesehen, die den Spannungspuls U(t) an der Wicklung abgreift. Um nun eine Aussage über die V0-Geschwindigkeit machen zu können, werden zwei Punkte P1, P2 des Spannungspulses U(t) vorgegeben und es wird der zeitliche Abstand bzw. das Zeitintervall TZ von Punkt P1 zu Punkt P2 ermittelt. Aus dem zeitlichen Abstand TZ wird die V0-Geschwindigkeit des Projektils 1 berechnet. Bei dieser Berechnung wird die Korrelationsgrösse K berücksichtigt, die spezifisch für den verschossenen Projektiltyp ist.

Das Zeitintervall TZ ist unter anderem abhängig von den folgenden Einflussgrössen:

- Länge L des Projektils 1;
- Durchmesser DG des Projektils 1;
- Material und Beschaffenheit (z.B. Permeabilität $\mu$r) des Projektils 1;
- Spulenstrom I;
- Aufbau der Spule 12

-    Anordnung der Spule 12 in Bezug auf Waffenrohr 11,

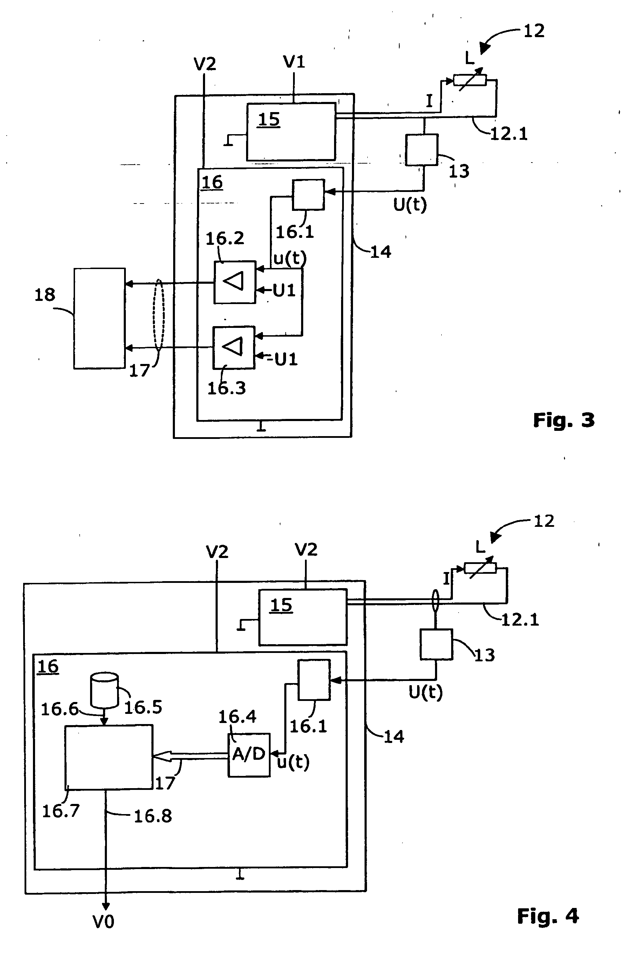

Ein erstes Ausführungsbeispiel einer geeigneten Auswertevorrichtung 16 ist in Fig. 3 gezeigt. Die Darstellung zeigt ein schematisches Blockdiagramm. Details des Blockdiagramms, so zum Beispiel die Auswahl und Dimensionierung der konkreten Bauteile, hängen von der gewählten Ausführungsform der Erfindung ab. In dem gezeigten Ausführungsbeispiel versorgt eine als Konstantstromquelle ausgebildete Versorgungseinrichtung 15 die Spule 12, die hier zusätzlich mit L bezeichnet ist, mit einem konstanten Spulenstrom I. Zu diesem Zweck liegt eine Versorgungsspannung V1 an der Versorgungseinrichtung bzw. Konstantstromquelle 15 an. Auf einer Seite der Spulenwicklung 12.1 wird die induzierte Spannung U(t) mittels einer geeigneten Entkoppelung 13 abgegriffen. Die Entkoppelung 13 kann zum Beispiel durch einen Widerstand R und/oder eine Spule L1 mit Netzwerk aus verschiedenen Teilelementen gebildet sein. Die Spannung U(t) wird einer Vorrichtung zur Messsignalaufbereitung 16.1 zugeführt, die zum Beispiel einen Impedanzwandler und/oder einen Verstärker umfasst. Es können hier auch weitere Bauteile vorgesehen werden, zum Beispiel um das Signal U(t) zu filtern. Das Ausgangssignal u(t) der Messsignalaufbereitung wird in der gezeigten Ausführungsform zwei Komparatoren 16.2 und 16.3 zugeführt. Der erste Komparator 16.2 vergleicht die Spannung u(t) mit einer ersten Referenzspannung U1 und der zweite Komparator 16.3 vergleicht die Spannung u(t) mit einer zweiten Referenzspannung -U1. In diesem Beispiel sind die Referenzspannungen symmetrisch bezüglich der Achse U = 0 angelegt. Die Referenzspannungen können aber auch unterschiedliche Werte haben (z.B. +U1 und -U2).

Zwei TTL-Pulse, oder andere Grössen, die mit dem zeitlichen Abstand bzw. Intervall TZ korreliert sind, können zum Beispiel über eine Verbindung 17 einer Auswertung bzw. Schaltungslogik 18 (zum Beispiel ein FPGA; field programmable array) zugeführt werden. Bei der Auswertung, die im Analogen oder Digitalen erfolgen kann, wird dann anhand des zeitlichen Abstandes TZ und der Korrelationsgrösse K die Geschwindigkeit V0 ermittelt.

In Fig. 2 ist auf der rechten Seite ein vereinfachter Verlauf der Spannung U(t) über der Zeit t gegeben. Der Spannungsverlauf hat einen ersten Kurvenzug K1 im positiven Spannungsbereich, einen Nulldurchgang bei t = ta und einen zweiten Kurvenzug K2 im negativen Spannungsbereich. Die Spannung nimmt von 0 Volt an zu, je weiter das Projektil 1 in das magnetische Feld der Spule 12 eindringt. Die Spannung U(t) erreicht dann ein Maximum und nimmt anschliessend bis zum Nulldurchgang wieder ab. Der Zeitpunkt des Nulldurchgangs ist mit t = ta bezeichnet. Vom Zeitpunkt t = ta an nimmt die Spannung weiter ab und erreicht ein Minimum. Bei Austreten des Projektils 1 aus dem magnetischen Feld der Spule 12 reduziert sich die induzierte Spannung U(t) wieder bis 0 Volt. Der Zeitpunkt, zu dem die induzierte Spannung U(t) wieder den Wert 0 erreicht, ist mit tb bezeichnet.

Die in Fig. 2 gezeigte Kurve U(t) ist für einen bestimmten Projektiltyp charakteristisch, wobei angemerkt sei, dass es sich um eine stark schematisierte Kurve handelt. Es wurden die beiden Punkte P1 und P2 festgelegt, und zwar in dem gezeigten Beispiel der Punkt P1 im ansteigenden Ast des ersten Kurvenzugs K1 und der Punkt P2 im ansteigenden Ast des zweiten Kurvenzugs K2. Die beiden Punkte P1 und P2 sind in diesem Beispiel bezüglich der induzierten Spannung symmetrisch angelegt, dass heisst, es ist U(P1) = - U(P2).

Vorzugsweise werden die Punkte P1 und P2 so festgelegt, dass sie im Bereich der grössten Steigung der Kurve U(t) liegen. Diese Punkte können gefunden werden, indem die zweite Ableitung der Kurve U(t) gebildet und so die Maxima der Steigung gesucht werden. Wählt man nämlich die Punkte P1 und P2 im steilen Bereich der Kurve U(t), so kann das Zeitintervall TZ genauer bestimmt werden, als wenn die Punkte in Bereichen der Kurve U(t) liegen würden, in denen die Kurve nur eine geringe Steigung hat.

Ein weiteres Ausführungsbeispiel einer geeigneten Auswertevorrichtung ist in Fig. 4 gezeigt. Eine Konstantstromquelle 15 versorgt die Spule 12 mit einem konstanten Spulenstrom I. Zu diesem Zweck liegt eine Versorgungsspannung V2 an der Konstantstromquelle 15 an. Es wird die induzierte Spannung U(t) abgegriffen. Die Spannung U(t) wird einer Vorrichtung zur Messsignalaufbereitung zugeführt, die in der gezeigten Ausführungsform einen Verstärker 16.1 und/oder einen Impedanzwandler umfasst. Es können hier auch weitere Bauteile vorgesehen werden, zum Beispiel um das Signal U(t) zu filtern. Der Verstärker 16.1 stellt ein verstärktes Signal u(t) bereit, das von einem Analog-Digital-Wandler 16.4 in ein digitales Signal umgesetzt wird. Das digitale Signal wird über einen Bus 17 einer Verarbeitungsvorrichtung 16.7, zum Beispiel einem Rechner, zugeleitet. Die Verarbeitungsvorrichtung 16.7 erhält aus einem Speicher 16.5 oder aus einem Register bzw. einer Tabelle Information über den Typ des verschossenen Projektils 1. Diese Information wird über eine Verbindung 16.6 bereit gestellt. Es kann zum Beispiel die Form der für den momentan verschossenen Projektiltyp geltenden Kurve U(t) und die Lage der Punkte P1 und P2 an die Verarbeitungsvorrichtung 16.7 übermittelt werden. Es kann auch die Korrelationsgrösse K über die Verbindung 16.6 bereit gestellt werden. Die Verarbeitungsvorrichtung 16.7 ermittelt dann aus der Information das Zeitintervall TZ und unter Benutzung der Korrelationsgrösse K dann auch die Mündungsgeschwindigkeit V0 des Projektils 1.

Die Verarbeitungsvorrichtung 16.7 kann Information über den zu verschiessenden Projektiltyp von einem Hauptrechner oder von einer Messeinrichtung übermittelt erhalten.

Gemäss der Erfindung dient also das Projektil 1 selbst als Messbasisstrecke. Es werden keine separaten Spulen mehr benötigt, die in einem Abstand zueinander angeordnet sind und so eine Messbasisstrecke bilden, und die nacheinander von dem Projektil durchflogen werden, um einen Start-Stop Zeitmessung nach dem Schrankenprinzip zu machen.

Es ist ein Vorteil der Erfindung, dass es keine zwei Spulen mehr gibt, die sich gegenseitig beeinflussen können. Da man gemäss Erfindung mit nur einer Spule arbeitet, ist, wie weiter oben erwähnt, die Länge der VO-Messvorrichtung wesentlich kürzer als bei bisherigen Lösungen.

Es ist, wie ebenfalls weiter oben erwähnt, ein weiterer Vorteil der Erfindung, dass man mit nur einem Messkanal auskommt, um die V0-Messung zu machen.

Eine Vorrichtung mit nur einer Spule ist weniger störanfällig.

## Patentansprüche

1. Vorrichtung (10) zur Ermittlung der Mündungegeechwindigkeit (V0) eines Projektils (1) beim Austritt aus dem Waffenrohr (11), mit einer Spule (12), die in Bewegungarichtung des Projektils (1) gesehen, nach dem Mündungsquerschnitt um eine Längsachse (11.1) des Waffenrohrs (11) herum anordenbar ist, einer Versorgungsvorrichtung (15) zum Einprägen eines Stromes (I) In die spule (12), um ein Magnetfeld (H) zu erzeugen sowie einer Auswertevorrichtung (16), die derart ausgebildet ist einen Spannungspuls (U(t)), der beim Durchtritt des Projektils (1) durch das Magnetfeld der Spule (12) Induziert wird, an der Spule (12) abzugreifen, wobei zwei vorgegebene Punkte (P1, P2) des Spannungspulses (U(t)) erfasst, das Zeitintervall (TZ) zwischen den zwei Punkten (P1, P2) ermittelt, und aus dem Zeitintervall (TZ) die Mündungsgeschwindigkeit (VO) des Projektils (1) berechnet werden, **dadurch gekennzeichnet dass** die zeitliche Dauer des Spannungspulses der Spule (12) mit der Mündungsgeschwindigkeit (VO) und der Länge (L) des Projektils (1) korreliert ist, der Verlauf des Spannungspulses (U(t)) und die Lage der vorgegebenen Punkte (P1, P2), die vom Typ des Projektils (1) abhängen, in einem Speicher (18,5), in einem Register oder in einer Tabelle vorgegeben sind und die Auswertevorrichtung (16) Information über das zu verschließende Projektil (1) von einem Hauptrechner oder von einer Messeinrichtung übermlttelt bekommt.

2. Vorrichtung nach Anspruch 1, **dadurch gekennzeichnet, dass** die Auswertevorrichtung (16) Zeitmessungsmittel (16.7) umfasst, um das Zeitintervall (TZ) der zwei Punkte (P1, P2) ermitteln zu können.

3. Vorrichtung nach Anspruch 1, **dadurch gekennzeichnet, dass** die Auswerlevorrichtung (16) eine Komparatorschaltung (16.2, 16.3) umfasst, die derart ausgebildet Ist, dass sie beim Erfassen eines ersten Punktes (P1) der zwei vorgegebenen Punkte (P1, P2) einen ersten Impuls und beim Erfassen des zweiten Punktes (P2) der zwei vorgegebenen Punkte (P1, P2) einen zweiten Impuls abgibt, wobei das Zeitintervall (TZ) der Zeltdauer zwischen dem ersten Impuls und dem zweiten Impuls entspricht und die Impulse vorzugsweise TTL-Signale sind.

4. Vorrichtung nach Anspruch 3, **dadurch gekennzeichnet, dass** die Komparatorschaltung (16.2, 16.3) derart ausgebildet ist, dass sie beim Erfassen des ersten Punktes (P1) der zwei vorgegebenen Punkte (P1, P2) einen Vergleich mit der Spannungsamplitude eines ersten Schwellenwerts (U1) und beim Erfassen des zweiten Punktes (P2) der zwei vorgegebenen Punkte (P1, P2) einen Vergleich mit der Spannungsamplitude eines zweiten Schwellenwerts (-U1) durchführt.

5. Vorrichtung nach einem der Ansprüche 1 bis 4, **dadurch gekennzeichnet, dass** die Versorgungsvorrichtung (15) eine Konstantstromquelle umfasst.

6. Vorrichtung nach Anspruch 1, **dadurch gekennzeichnet, dass** die Auswertevorrichtung (16) einen Analog-Digital-Wandler (16.4) umfasst, um den Spannungspuls (U(t)) abzutasten und in digitale Werte umzuwandeln.

7. Vorrichtung nach Anspruch 6, **dadurch gekennzeichnet, dass** die Auswertevorrichtung (16) eine digitale Verarbeitungsvorrichtung (16.7) umfasst, die derart ausgebildet Ist, dass sie die zwei vorgegebenen Punkte (P1, P2) des Spannungspulses (U(t)) erfasst, indem korrespondiere digitale Werte durch einen Vergleich mit gespeicherten, vorgegebenen Werten ausgewertet werden.

8. Vorrichtung nach einem der Ansprüche 1 bis 7, **dadurch gekennzeichnet, dass** der Spannungspuls (U(t)) einen ersten Kurvenzug (K1), einen Nulldurchgang und einen zweiten Kurvenzug (K2) aufweist, wobei der Nulldurchgang mit dem Zeltpunkt (t = ta) korreliert ist, zu dem sich das Projektil (1) mittig in der Spule (12) befindet.

9. Vorrichtung nach Anspruch 6, **dadurch gekennzeichnet, dass** der erste Punkt (P1) der zwei vorgegebenen Punkte (P1, P2) im Bereich des ersten Kurvenzugs (K1) und der zweite Punkt (P2) der zwei vorgegebenen) Punkte (P1, P2) Im Bereich des zweiten Kurvenzuge (K2) liegen.

**10.** Vorrichtung nach einem der Ansprüche 1 bis 8, **dadurch gekennzeichnet, dass** der Spannungspuls (U(t)) einen Verlauf hat, der von dem Spulendurchmesser (D), den Abmessungen (L, DG) des Projektills (1), der Permeabilität (µr) des Projektils (1) und dem Strom (I) abhängt.

**11.** Vorrichtung nach einem der Ansprüche 1 bis 10, **dadurch gekennzeichnet, dass** es eine vorherbestimmbara Korrelatlonsgrösse (K) zwischen der Mündungsgeschwindigkeit des Projektils (1) und dem Zeitintervall (TZ) der zwei Punkte (P1, P2) gibt, die beim Berechnen der Mündungsgeschwindigkeit (VO) eingesetzt wird.

**12.** Vorrichtung nach einem der Ansprüche 1 bis 11, **dadurch gekennzeichnet, dass** die Auswertevorrichtung (16) Mittel (16.7) umfasst, um für jeden neuen Typ des Projektils (1) eine Ausgleichsrechnung zwischen der Mündungsgeschwindigkeit (VO) und dem Zeitintervall (TZ) durchführen zu können.

**13.** Verfahren zur Ermittlung der Mündungegeschwindigkeit eines Projektils (1) beim Austritt aus einem Waffenrohr (11), wobei eine Spule (12) In Bewegungsrichtung des Projektils (1) gesehen, nach dem Mündungsquerschnitt um eine Längsachse (11.1) des Waffenrohrs (11) angeordnet ist, mit folgenden Schritten:

• Einspeison eines Stroms (I) In die Spule (12), um ein Magnetfeld (H) zu erzeugern,
• Bewegen des Projektils (1) durch das Magnetfeld (H) der Spule (12) hindurch,
• Abgreifen eines Spannungspulses (U(t)), der beim Durchtritt des Projektils (1) durch das Magnetfeld (H) der Spule (12) induziert wird und dessen zeitliche Dauer mit der Mündungsgeachwindlgkeit ($V_0$) und der Länge (L) des Projektils (1) korreliert ist,
• Ermitteln des zeitlichen Abstandes (TZ) zwischen zwei Punkten (P1, P2) des Spannungspulses (U(t)), wobei die Punkte (P1, P2) vorgegeben sind, sowie der Verlauf des Spannugspulses (U(t)) und die Lage der vorgegebenen Punkte (P1, P2), die vom Typ des Projektils (1) abhängen, In einem Speicher (16.5), In einem Register oder in einer Tabelle vorgegeben sind,
• Übermitteln der Information an die Auswertevorrichtung (16) über das zu verschließende Projektil (1) von einem Hauptrechner oder von einer Messeinrichtung,
• Bereltstellen einer Korrelationsgrösse (K), der für den Typ des Projektils (1) charakteristisch ist,
• Ermitteln der Moridungsgeschwindigkeit (V0) des Projektils (1) unter Verwendung der Korrelationagrösse (K) und des zeitintervalls (TZ).

**14.** Verfahren nach Anspruch 13, **dadurch gekennzeichnet, dass** der Typ des Projektils (1) automatisch erkannt oder manuell eingegeben wird.

**15.** Verfahren nach Anspruch 13 oder 14, **dadurch gekennzeichnet, dass** vor dem Ermitteln des zeitlichen Abstandes (TZ) der Spannungspuls (U(t)) einer Analog-Digital-Wandlung unterzogen wird,

**Claims**

**1.** Device (10) for determining the muzzle velocity (V0) of a projectile (1) as it exits the weapon barrel (11), with a coil (12) which, looking in the direction of motion of the projectile (1), can be arranged around a longitudinal axis (11.1) of the weapon barrel (11) after the muzzle cross section, a supply device (15) for impressing a current on the coil (12) in order to generate a current (I) in the coil (12) so as to generate a magnetic field (H) and an evaluation device (16) that is designed to acquire a voltage pulse (U(t)) at the coil, which is induced when the projectile (1) passes through the magnetic field of the coil (12), whereby two predefined points (P1, P2) of the voltage pulse (U(t)) are recorded, the time interval (TZ) between the two points (P1, P2) is determined and the muzzle velocity (V0) of the projectile (1) is calculated from the time interval (TZ), **characterized in that** the time duration of the voltage pulse of the coil (12) is correlated with the muzzle velocity (V0 and the length (L) of the projectile (1), the profile of the voltage pulse (U(t)) and the position of the predefined points (P1, P2), which depend on the projectile (1) type, are defined in a memory (16.5), in a register or in a table and the evaluation device (16) receives information transferred from a main computer or from a measurement device about the projectile (1) to be fired.

**2.** Device according to Claim 1, **characterised in that**, the evaluation device (16) comprises time measurement means (16.7) to enable determination of the time interval (TZ) of the two points (P1, P2).

**3.** Device according to Claim 1, **characterised in that**, the evaluation device (16) comprises a comparator circuit (16.2, 16.3) that is designed in such a way that it outputs a first pulse on detecting the first point (P1) of the two predefined points (P1, P2) and outputs a second pulse on detecting the second point (P2) of the two predefined points (P1, P2), wherein the time interval (TZ) corresponds to the time period between the first pulse and the second pulse and the pulses are preferably TTL signals.

4. Device according to Claim 3, **characterised in that**, the comparator circuit (16.2, 16.3) is designed in such a way that on detecting the first point (P1) of the two predetermined points (P1, P2) it carries out a comparison with the voltage amplitude of a first threshold value (U1) and on detecting the second point (P2) of the two predetermined points (P1, P2) it carries out a comparison with the voltage amplitude of a second threshold value (-U1).

5. Device according to any one of Claims 1 to 4, **characterised in that**, the supply device (15) comprises a constant current source.

6. Device according to Claim 1, **characterised in that**, the evaluation device (16) comprises an analogue-to-digital converter (16.4) in order to sample the voltage pulse (U(t)) and convert it into digital form.

7. Device according to Claim 6, **characterised in that**, the evaluation device (16) comprises a digital processing device (16.7), which is designed in such a way that it detects the two predetermined points (P1, P2) of the voltage pulse (U(t)), **in that** corresponding digital values are evaluated by a comparison with stored predetermined values.

8. Device according to any one of Claims 1 to 7, **characterised in that**, the voltage pulse U(t)) has a first curve segment (K1), a null crossing and a second curve segment (K2), wherein the null crossing is correlated with the time point (t = ta) at which the projectile (1) is located centrally in the coil (12).

9. Device according to Claim 8, **characterised in that**, the first point (P1) of two predetermined points (P1, P2) is in the vicinity of the first curve segment (K1) and the second point (P2) of the two predetermined points (P1, P2) is in the vicinity of the second curve segment (K2).

10. Device according to any one of Claims 1 to 8, **characterised in that**, the voltage pulse U(t)) has a profile that depends on the coil diameter (D), the dimensions (L, DG) of the projectile (1), the permeability ($\mu$r) of the projectile (1) and the current (I).

11. Device according to any one of Claims 1 to 10, **characterised in that**, there is a predeterminable correlation parameter (K) between the muzzle velocity of the projectile (1) and the time interval (TZ) of the two points (P1, P2) that is used in calculating the muzzle velocity (V0).

12. Device according to any one of Claims 1 to 11, **characterised in that**, the evaluation device (16) comprises means (16.7) to enable a compensation computation to be conducted between the muzzle velocity (V0) and the time interval (TZ) for each new type of the projectile (1).

13. Method of determining the muzzle velocity of a projectile (1) on exiting from a weapon barrel (11), wherein a coil (12) is arranged after the muzzle cross section about a longitudinal axis (11.1) of the weapon barrel (11) when viewed in the direction of motion of the projectile (1), with the following steps:

   • Supplying a current (I) to the coil (12) in order to generate a magnetic field (H),
   • Moving the projectile (1) through the magnetic field (H) of the coil (12),
   • Tapping a voltage pulse (U(t)), which is induced when the projectile (1) passes through the magnetic field (H) of the coil (12) and whose time duration is correlated with the muzzle velocity ($V_0$) and the length (L) of the projectile (1),
   • Determining the time separation (TZ) between two points (P1, P2) of the voltage pulse (U(t)), wherein the points (P1, P2) are predetermined and the profile of the voltage pulse (U(t)) and the position of the predetermined points (P1, P2), which depend on the projectile (1) type, are predetermined in a memory (16.5), in a register or in a table,
   • Transferring the information about the projectile (1) to be fired to the evaluation device (16) from a main computer or from a measurement device,
   • Providing a correlation parameter (K) that is characteristic of the type of projectile (1),
   • Determining the muzzle velocity ($V_0$) of the projectile (1) using the correlation parameter (K) and the time interval (TZ).

**14.** Device according to Claim 13, **characterised in that**, the type of the projectile (1) is detected automatically or entered manually.

**15.** Device according to Claim 13 or 14, **characterised in that**, the voltage pulse (U(t)) is subjected to an analogue-to-digital conversion before determining the time separation (TZ).

**Revendications**

**1.** Dispositif (10) pour déterminer la vitesse initiale (V0) d'un projectile (1) lors de la sortie du canon d'une arme (11), comprenant une bobine (12) qui, vue dans le sens du déplacement du projectile (1), est disposée après la section transversale de la gueule autour d'un axe longitudinal (11.1) du canon de l'arme (11), un dispositif d'alimentation (15) pour appliquer un courant (I) dans la bobine (12) afin de générer un champ magnétique (H) ainsi qu'un dispositif d'interprétation (16) qui est configuré de façon à détecter une impulsion de tension (U(t)) au niveau de la bobine (12) qui est induite lors du passage du projectile (1) à travers le champ magnétique de la bobine (12), deux points (P1, P2) prédéfinis de l'impulsion de tension (U(t)) étant détectés, l'intervalle de temps (TZ) entre les deux points (P1, P2) étant déterminé et la vitesse initiale (V0) du projectile (1) étant calculée à partir de l'intervalle de temps (TZ), **caractérisé en ce que** la durée dans le temps de l'impulsion de tension de la bobine (12) est corrélée avec la vitesse initiale (V0) et la longueur (L) du projectile (1), le tracé de l'impulsion de tension (U(t)) et la position des points (P1, P2) prédéfinis, lesquels dépendent du type de projectile (1), sont prédéfinis dans une mémoire (16.5), dans un registre ou dans un tableau et le dispositif d'interprétation (16) se faisant communiquer des informations sur le projectile (1) à tirer depuis un ordinateur central ou un dispositif de mesure.

**2.** Dispositif selon la revendication 1, **caractérisé en ce que** le dispositif d'interprétation (16) comprend des moyens de mesure du temps (16.7) afin de pouvoir déterminer l'intervalle de temps (TZ) des deux points (P1, P2).

**3.** Dispositif selon la revendication 1, **caractérisé en ce que** le dispositif d'interprétation (16) comprend un circuit comparateur (16.2, 16.3) qui est configuré de telle sorte qu'il délivre une première impulsion lors de la détection d'un premier point (P1) des deux points (P1, P2) prédéfinis et une deuxième impulsion lors de la détection du deuxième point (P2) des deux points (P1, P2) prédéfinis, l'intervalle de temps (TZ) correspondant à la durée entre la première impulsion et la deuxième impulsion et les impulsions étant de préférence des signaux TTL.

**4.** Dispositif selon la revendication 3, **caractérisé en ce que** le circuit comparateur (16.2, 16.3) est configuré de telle sorte que lors de la détection du premier point (P1) des deux points (P1, P2) prédéfinis, il effectue une comparaison avec l'amplitude de tension d'une première valeur de seuil (U1) et, lors de la détection du deuxième point (P2) des deux points (P1, P2) prédéfinis, il effectue une comparaison avec l'amplitude de tension d'une deuxième valeur de seuil (-U1).

**5.** Dispositif selon l'une des revendications 1 à 4, **caractérisé en ce que** le dispositif d'alimentation (15) comprend une source de courant constant.

**6.** Dispositif selon la revendication 1, **caractérisé en ce que** le dispositif d'interprétation (16) comprend un convertisseur analogique/numérique (16.4) pour échantillonner l'impulsion de tension (U(t)) et la convertir en valeurs numériques.

**7.** Dispositif selon la revendication 6, **caractérisé en ce que** le dispositif d'interprétation (16) comprend un dispositif de traitement numérique (16.7) qui est configuré de telle sorte qu'il détecte les deux points (P1, P2) prédéfinis de l'impulsion de tension (U(t)) en interprétant les valeurs numériques correspondantes par une comparaison avec des valeurs prédéfinies mémorisées.

**8.** Dispositif selon l'une des revendications 1 à 7, **caractérisé en ce que** l'impulsion de tension (U(t)) présente un premier tracé de courbe (K1), un passage par zéro et un deuxième tracé de courbe (K2), le passage par zéro étant corrélé avec l'instant (t = ta) auquel le projectile (1) se trouve au centre de la bobine (12).

**9.** Dispositif selon la revendication 8, **caractérisé en ce que** le premier point (P1) des deux points (P1, P2) prédéfinis se trouve dans la zone du premier tracé de courbe (K1) et le deuxième point (P2) des deux points (P1, P2) prédéfinis se trouve dans la zone du deuxième tracé de courbe (K2).

**10.** Dispositif selon l'une des revendications 1 à 8, **caractérisé en ce que** l'impulsion de tension (U(t)) présente un tracé qui dépend du diamètre de la bobine (D), des dimensions (L, DG) du projectile (1), de la perméabilité ($\mu$r) du projectile (1) et du courant (I).

11. Dispositif selon l'une des revendications 1 à 10, **caractérisé en ce qu'**il existe une grandeur de corrélation (K) pouvant être définie à l'avance entre la vitesse initiale du projectile (1) et l'intervalle de temps (TZ) des deux points (P1, P2), laquelle est utilisée lors du calcul de la vitesse initiale (V0).

12. Dispositif selon l'une des revendications 1 à 11, **caractérisé en ce que** le dispositif d'interprétation (16) comprend des moyens (16.7) pour pouvoir effectuer un calcul de compensation entre la vitesse initiale (V0) et l'intervalle de temps (TZ) pour chaque nouveau type de projectile (1).

13. Procédé pour déterminer la vitesse initiale d'un projectile (1) lors de la sortie du canon d'une arme (11), une bobine (12), vue dans le sens du déplacement du projectile (1), étant disposée après la section transversale de la gueule autour d'un axe longitudinal (11.1) du canon de l'arme (11), comprenant les étapes suivantes :

   * injection d'un courant (I) dans la bobine (12) afin de générer un champ magnétique (H)
   * déplacement du projectile (1) à travers le champ magnétique (H) de la bobine (12),
   * détection d'une impulsion de tension (U(t)) qui est induite lors du passage du projectile (1) à travers le champ magnétique (H) de la bobine (12) et dont la durée dans le temps est corrélée avec la vitesse initiale (V0) et la longueur (L) du projectile (1),
   * détermination de l'intervalle de temps (TZ) entre deux points (P1, P2) de l'impulsion de tension (U(t)), les points (P1, P2) étant prédéfinis, ainsi que le tracé de l'impulsion de tension (U(t)) et la position des points (P1, P2) prédéfinis, lesquels dépendent du type de projectile (1), sont prédéfinis dans une mémoire (16.5), dans un registre ou dans un tableau,
   * communication des informations sur le projectile (1) à tirer au dispositif d'interprétation (16) depuis un ordinateur central ou un dispositif de mesure,
   * mise à disposition d'une grandeur de corrélation (K) qui est caractéristique pour le type de projectile (1),
   * détermination de la vitesse initiale (V0) du projectile (1) en utilisant la grandeur de corrélation (K) et l'intervalle de temps (TZ).

14. Procédé selon la revendication 13, **caractérisé en ce que** le type de projectile (1) est détecté automatiquement ou saisi manuellement.

15. Procédé selon la revendication 13 ou 14, **caractérisé en ce que** l'impulsion de tension (U(t)) est soumise à une conversion analogique/numérique avant la détermination de l'intervalle de temps (TZ).

**Fig. 1**

t=0

t=ta

t=tb

**Fig. 2**

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- SE 2003096103
- EP 0108973 A1
- GB 2200215 A
- JP 05164760 B
- US 4228397 A
- CH 693248 A